# EUROPÄISCHE PATENTSCHRIFT

(11) **EP 2 457 011 B1**
(45) Veröffentlichungstag und Bekanntmachung des Hinweises auf die Patenterteilung: **10.07.2013**
(21) Anmeldenummer: 10734923.5
(22) Anmeldetag: 21.07.2010
(51) Int. Cl.: F16L 59/18

(54) **VERFAHREN ZUR VERBINDUNG EINES ANSCHLUSSSTÜCKS MIT EINEM WÄRMEISOLIERTEN LEITUNGSROHR**
METHOD FOR CONNECTING A CONNECTING PIECE TO A HEAT INSULATED CONDUIT PIPE
PROCÉDÉ POUR RELIER UNE PIÈCE DE RACCORDEMENT AVEC UN CONDUIT THERMO-ISOLÉ

(30) Priorität: 22.07.2009 CH 11502009
(43) Veröffentlichungstag der Anmeldung: 30.05.2012
(73) Patentinhaber: Brugg Rohr AG, Holding, 5200 Brugg (CH)
(72) Erfinder: SCHALLER, Werner, CH-5212 Hausen (CH)
(74) Vertreter: Schalch, Rainer
(86) Internationale Anmeldenummer: PCT/EP2010/004451
(87) Internationale Veröffentlichungsnummer: WO 2011/009598

(56) Entgegenhaltungen:
- EP-A1- 0 336 867
- EP-A1- 0 897 788
- DE-U1-202007 015 991
- US-B1- 7 302 972

## Beschreibung

### Technisches Gebiet

Die Erfindung betrifft ein Verfahren zur Verbindung eines Anschlussstücks mit einem wärmeisolierten Leitungsrohr, welches ein Innenrohr, eine dieses umgebende Dämmschicht und einen äusseren Mantel umfasst, wobei eine Hülse des Anschlussstücks im Innenrohr befestigt wird. Ferner betrifft die Erfindung eine Verbindungsanordnung zur Durchführung des Verfahrens gemäss Anspruch 6.

### Stand der Technik

Es sind wärmegedämmte Leitungsrohre bekannt, welche ein Innenrohr für das zu leitende Medium aufweisen, wobei das Innenrohr zur Wärmedämmung mit einer Dämmschicht umgeben ist, welche ihrerseits von einem äusseren Mantel umschlossen ist. Das Innenrohr kann aus Kunststoff bestehen und z.B. ein Rohr aus vernetztem Polyethylen sein. Die Dämmschicht kann aus geschäumtem Polyurethan bestehen oder aus einem anderen geschäumten Kunststoff bestehen. Der Aussenmantel besteht ebenfalls aus Kunststoff und das Leitungsrohr kann mit einer Wellung versehen sein, um seine Biegbarkeit zu verbessern, oder es kann aussen glatt sein. Ein Verfahren zur Herstellung solcher Rohre bzw. ein derartiges Rohr ist insbesondere aus EP-A 0 897 788 bekannt. Bei der stirnseitigen Verbindung eines Anschlussstücks mit einem solchen oder ähnlichen wärmeisolierten Leitungsrohren wird bekanntermassen so vorgegangen, dass im Verbindungsbereich der Aussenmantel und die Wärmeisolation entfernt werden, wodurch das Innenrohr freigelegt wird. Dann wird eine Hülse des Anschlussstücks im Innenrohr befestigt, wozu eine Vielzahl von Vorgehensweisen bzw. Ausgestaltungen von Anschluss-stücken zur Verfügung stehen. Das bekannte Vorgehen ist aufwändig. Der von der Wärmeisolation befreite Teil des Innerohrs muss später wieder isoliert werden, wobei er bekanntermassen in einer Schale angeordnet wird, die dann mit einem wärmedämmenden Material ausgeschäumt wird. Wärmeisolierte Leitungsrohre der geschilderten Art werden z.B. bei Heizwärmenetzen, Trinkwasserleitungen, Abwasserleitungen und Kälteleitungen eingesetzt. Die gattungsbildende EP 0 336 867 A1 zeigt ein Verbindungsstück für flexible Metall-Leitungen, welche ein Innenrohr, ein Aussenrohr und eine dazwischen liegende Isolationsschicht aufweisen. DE 20 2007 015991 U1 zeigt einen Verbindungsbausatz für eine Leitung mit einer Innenschicht und einer Isolationsschicht und allenfalls einer Schutzschicht. Die Verbindungseinrichtung weist ferner einen Stützkörper und eine Schiebehülse auf

### Darstellung der Erfindung

Der Erfindung liegt die Aufgabe zu Grunde, ein einfacheres Verfahren für das Anschliessen eines Anschlussstücks an einem wärmeisolierten Leitungsrohr zu schaffen.

Dies wird bei dem eingangs genannten Verfahren dadurch erzielt, dass an der Stirnseite des Leitungsrohrs ein Kalibrierring mit einer zylinderischen Innenwand zwischen der Aussenwand des Innenrohrs und der Isolationsschicht eingetrieben wird, so dass die zylindrische Innenwand des Kalibrierrings die Aussenwand des Innenrohrs beaufschlagt, und dass die Hülse in dem vom Kalibrierring beaufschlagten Innenrohr befestigt wird.

Mit dem Kalibrierring kann eine kreiszylindrische Form des Innenrohrs im Verbindungsbereich erzwungen werden, wobei das Innenrohr dazu nicht freigelegt wird. Die Isolationsschicht und der Mantel bleiben somit im Verbindungsbereich erhalten bzw. die Arbeitsschritte zu deren Entfernung entfallen. Die Hülse des Anschlussstücks kann somit in einem im Wesentlichen genau kreiszylindrischen Innenrohr befestigt bzw. dichtend festgelegt werden. Der Kalibrierring nimmt dabei die radiale Kraft der Hülse auf das Innenrohr auf.

Bevorzugt wird in einem ersten Schritt der Kalibrierring in das Leitungsrohr eingeführt bzw. eingetrieben und insbesondere eingepresst oder eingeschlagen, und erst danach wird die Hülse in das Innenrohr eingebracht. Es kann aber auch umgekehrt vorgegangen werden, so dass zunächst die Hülse in das Leitungsrohr eingebracht und anschliessend der Kalibrierring in das Leitungsrohr eingepresst oder eingeschlagen wird.

Die Hülse des Anschlussstücks kann einstückig ausgeführt sein. Sie kann mit mindestens einem Dichtungselement, z.B. einem O-Ring, zur Abdichtung versehen sein und Krallen oder ähnliche Ausformungen aufweisen, um im Innenrohr festgelegt zu sein. Bei einer Ausführungsform kann die Hülse auch mehrstückig, insbesondere zweistückig, ausgeführt sein und auf einem Hülsenteil eine Klemmhülse tragen, insbesondere eine geschlitzte Klemmhülse. Bei einer weiteren Ausführungsform ist die Hülse mit einem Schraubgewinde versehen und wird in das Kunststoff-Innenrohr eingeschraubt. Dabei kann die Hülse einstückig sein oder bevorzugt mehrstückig bzw. zweistückig ausgeführt sein und dabei eine drehbare Gewindehülse auf einem stationären Hülsenteil aufweisen.

Diese Aufgabe wird ferner mit einer Verbindungsanordnung gemäss Anspruch 6 gelöst. Diese ergibt die beim Verfahren genannten Vorteile.

### Kurze Darstellung der Zeichnungen

Im Folgenden werden Ausführungsbeispiele der Erfindung anhand der Zeichnungen näher erläutert. Dabei zeigt
Figur 1 eine Schnittansicht durch das Ende eines Leitungsrohrs mit einem daran gemäss einer ersten Ausführungsform der Erfindung befestigten Anschlussstück;
Figur 2 eine Schnittansicht durch das Ende eines Leitungsrohrs mit einem daran gemäss einer weiteren Ausführungsform der Erfindung befestigten Anschlussstück; und
Figur 3 eine Schnittansicht durch das Ende eines Leitungsrohrs mit einem daran gemäss einer weiteren Ausführungsform der Erfindung befestigten Anschlussstück.

### Wege zur Ausführung der Erfindung

Die Figuren zeigen jeweils Schnittdarstellungen durch den Endbereich eines Leitungsrohrs, wobei die Längsachse L des Leitungsrohrs in der Schnittebene liegt. Zur Vereinfachung der Figur wird jeweils nur der Teil des rotationssymmetrischen Leitungsrohrs und des im Verbindungsbereich rotationssymmetrischen Anschlussstücks oberhalb der Längsachse L dargestellt. Das Anschlussstück kann eine beliebige bekannte Ausführung bzw. Funktion als Rohrkupplung oder Armatur oder als Fitting haben und ausserhalb des dargestellten Verbindungsbereichs mit dem Leitungsrohr entsprechend ausgestaltet sein. Das Leitungsrohr weist jeweils eine das Innenrohr umgebende Wärmedämmung und einen Aussenmantel auf. Insbesondere sind die Wärmedämmung und der Aussenmantel gewellt. Ein solches Leitungsrohr kann insbesondere gemäss EP-A 897 788 ausgebildet sein bzw. hergestellt werden.

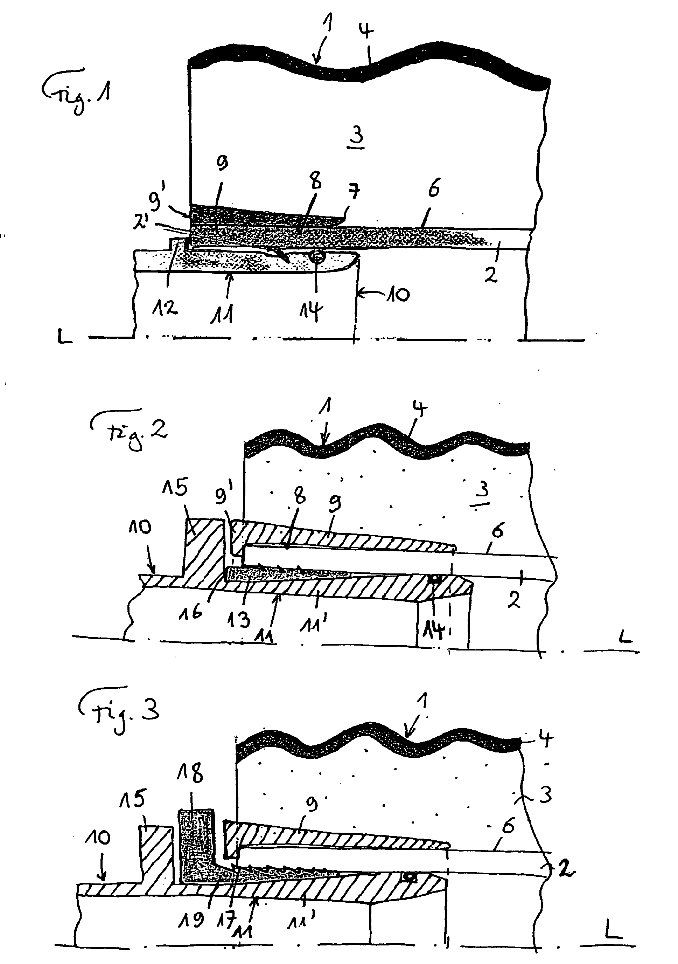

Figur 1 zeigt ein solches Leitungsrohr 1 mit dem Aussenmantel 4 aus Kunststoff und der geschäumten Wärmedämmung bzw. Isolationsschicht 3, die vorzugsweise aus einem Polyurethanschaum gebildet ist. Die Wärmedämmung umgibt das Innenrohr 2 und liegt an dessen Aussenseite 6 an. Gemäss der Erfindung wird ein Kalibrierring 9, der vorzugsweise aus Metall besteht, aber auch aus Kunststoff bestehen kann, stirnseitig in das Leitungsrohr eingeführt bzw. eingetrieben und insbesondere eingepresst. Dieser Kalibrierring 9 weist eine kreiszylindrische Innenwand 8 auf und ist mit seinem Innendurchmesser an den Aussendurchmesser des Innenrohrs 2 angepasst, so dass die Innenwand 8 des Kalibrierrings die Aussenwand 6 des Innenrohrs beaufschlagt bzw. so dimensioniert ist, dass sie mit einem Passsitz oder Übergangssitz auf dem Innenrohr aufsitzt und somit beim Eintreiben die Wärmedämmung bzw. Isolationsschicht 3 von der Aussenseite 6 des Innenrohrs 2 verdrängt, wenn auch die Dämmschicht 3 und der Aussenmantel 4 bei der vorliegenden Erfindung intakt bleiben und nicht, wie im Stand der Technik, vom Innenrohr entfernt werden. Es kann sich bei der Passung des Kalibrierrings auf dem Innenrohr auch um einen Presssitz handeln, bei welchem das Innenrohr 2 bereits leicht zusammengedrückt wird. Der Kalibrierring 9 weist insbesondere die dargestellte konische Aussenform auf, die an ihrer Vorderseite 7 scharfkantig sein kann, um das Einpressen in das Leitungsrohr 1 bzw. das Verdrängen der Wärmedämmung zu erleichtern. Es kann aber auch eine zylindrische Aussenform vorgesehen sein und an der scharfkantigen Vorderkante kann ein konischer Teil als "Einlaufkonus" vorgesehen sein. Ferner kann die kreiszylindrische Innenwand 8 mit einer Verzahnung oder anderen Ausformungen, insbesondere Haltekrallen versehen sein, um die Haftung des eingepressten Kalibrierrings 9 auf dem Innenrohr zu verbessern. Durch die kreiszylindrische Form der Innenwand 8 und den Pass- oder Presssitz wird das Innenrohr 2, dort wo der Kalibrierring aufgepresst ist, in eine ebenfalls kreiszylindrische Form gezwungen. Diese Form ist ansonsten bei dem Kunststoffrohr 2 nicht gewährleistet, da dieses bereits vor der Herstellung des Leitungsrohrs durch seine Lagerung auf grossen Trommeln verformt worden sein kann oder im Verlauf der Herstellung des Leitungsrohrs verformt worden sein kann, so dass seine Querschnittsform nicht mehr kreiszylindrisch ist. Dies wird durch den Kalibrierring behoben, der durch einen Pressvorgang mit einem Presswerkzeug zwischen die Isolationsschicht 3 und das Innenrohr 2 eingetrieben wird oder einfach dadurch eingeführt wird, dass der Kalibrierring mit Schlägen mit einem Hammer stirnseitig in das Leitungsrohr 1 eingeschlagen wird. Auch die nachfolgend noch genauer erläuterte Hülse 11 kann zum Einpressen oder Einschlagen des Kalibrierrings 9 dienen, wenn ihr Kragen 12 so gross ist, dass der Kalibrierring dadurch beaufschlagt wird. Somit werden dann der Kalibrierring und die Hülse 11 gleichzeitig in das Leitungsrohr eingebracht.

Wesentlich ist, dass das Innenrohr nicht durch Entfernung des Aussenmantels 4 und der Wärmedämmung 3 freigelegt werden muss. Die Isolationsschicht und der Mantel bleiben somit im Verbindungsbereich erhalten bzw. die Arbeitsschritte zu deren Entfernung entfallen.

In Figur 1 ist dargestellt, dass der Kalibrierring mit seiner Stirnseite 9' bündig mit der Stirnseite 2' des Innenrohrs zu liegen kommt. Wie erwähnt, kann das Einführen bzw. Einpressen oder Einschlagen des Kalibrierrings vorgenommen werden, bevor die Hülse 11 des Anschlussstücks 10 im Innenrohr befestigt wird und dies ist die bevorzugte Vorgehensweise. Bei der in Figur 1 dargestellten Ausführungsform, bei welcher das Anschlussstück 10 mit seinem Kragen 12 die Stirnseite 2' des Innenrohrs nur teilweise überdeckt, ist es aber ebenso möglich, den Kalibrierring erst in einem zweiten Schritt, nach der Einführung der Hülse 11 des Anschlussstücks in das Innenrohr 2, über das Innenrohr zu pressen.

Das Anschlussstück 10 wird bei dem Ausführungsbeispiel von Figur 1 dadurch fest mit dem Innenrohr verbunden, dass eine Hülse 11 des Anschlussstücks in das Innenrohr eingepresst wird. Dazu ist der Aussendurchmesser der Hülse 11 so gewählt, dass sich ein Presssitz der Hülse 6 im Innenrohr 2 ergibt, wodurch das Kunststoff-Innenrohr zwischen dem Kalibrierring 9 und der Hülse 11 fest eingeklemmt wird. Es können Ausformungen oder separate Halteelemente an der Aussenseite der Hülse 11 vorgesehen sein, welche sich in das Kunststoffmaterial des Innenrohrs eingraben, um eine sichere Befestigung der Hülse 11 im Innenrohr 2 zu ergeben. Für die Fluidabdichtung zwischen Innenwand des Innenrohrs und der Hülse 11 wird vorzugsweise mindestens ein Dichtungsring 14 an der Hülse 11 vorgesehen.

Figur 2 zeigt ein weiteres Ausführungsbeispiel der Erfindung. Gleiche Bezugszeichen wie in Figur 1 bezeichnen wiederum dieselben Elemente. Das Leitungsrohr 1 weist den äusseren Mantel 4 und die Wärmedämmung 3 auf, welche das Innenrohr 2 umgeben. Der Kalibrierring ist hier so ausgeführt, dass seine Stirnseite 9' einen Kragen aufweist, der die Stirnseite des Innenrohrs teilweise übergreift. Damit ist ein Anschlag gegen zu tiefes Einpressen oder Einschlagen des Kalibrierrings 9 in das Leitungsrohr 1 gegeben. Dieses Einpressen oder Einschlagen erfolgt ansonsten wie bei Figur 1 erläutert. Die Stirnseite 9¹ kann ferner auch einen Anschlag für einen Kragen 15 des Anschlussstücks 10 bilden. Das Anschlussstück bzw. dessen Hülse 11 zur Einführung in das Innenrohr 2 ist in diesem Beispiel mehrstückig ausgeführt und weist einen Hülsenteil 11', der eine vom Kragen 15 bis nahe zum Dichtungsring 14 konisch im Umfang zunehmende Aussenwand hat, und eine Klemmhülse 13 auf, die einen der konischen Aussenwand entgegengesetzt angepassten Innenkonus aufweist, so dass die Klemmhülse 13 im Wesentlichen vollflächig auf dem Hülsenteil 11' aufliegt. Die Klemmhülse 13 ist in der Regel mit einem Schlitz versehen (z.B. als Längsschlitz oder als spiralförmiger Schlitz), um deren Montage auf dem Hülsenteil 11' des Anschlussstücks zu ermöglichen. Die Hülse 11 des Anschlussstücks 10 mit dem ersten Hülsenteil 11¹ und der konischen Klemmhülse 13 als zweitem Hülsenteil, die auf ihrer der Innenwand des Innenrohrs 2 zugewandten Aussenseite mit Ausformungen versehen sein kann, die sich in der Innenwand des Innerohrs "verkrallen" können, wird ebenfalls durch Einschieben bzw. Einschlagen oder Einpressen in das Innenrohr 2 eingetrieben bzw. darin befestigt, um das Leitungsrohr dicht mit dem Anschlussstück zu verbinden. Das Leitungsrohr 2 wird dabei zwischen dem Kalibrierring und der mehrstückigen Hülse 11', 13 eingeklemmt und dabei verformt. Vorzugsweise ist am hinteren Ende der Klemmhülse 13 ein elastisches Element 16 vorgesehen, welches ein allfälliges Spiel zwischen dem Kragen 15 und der Klemmhülse 13 des Anschlussstücks 1 bzw. zwischen dem Innenrohr 2 und dem Aussenumfang der Klemmhülse 13 aufnimmt.

Figur 3 zeigt ein weiteres Ausführungsbeispiel der Erfindung. Gleiche Bezugszeichen wie in Figur 1 bzw. Figur 2 bezeichnen wiederum dieselben Elemente. Das Leitungsrohr 1 weist den äusseren Mantel 4 und die Wärmedämmung 3 auf, welche das Innenrohr 2 umgeben. Der Kalibrierring ist auch hier so ausgeführt, dass seine Stirnseite 9' einen Kragen aufweist, der die Stirnseite des Innenrohrs teilweise übergreift. Damit ist ein Anschlag für das Einführen bzw. Einpressen oder Einschlagen des Kalibrierrings 9 in das Leitungsrohr 1 gegeben. Eine Ausführung gemäss Figur 1 ist aber auch möglich. Das Einpressen oder Einschlagen des Kalibrierings erfolgt ansonsten wie bei Figur 1 erläutert. Die Stirnseite 9' kann ferner auch einen Anschlag für einen Kragen 18 einer Schraubhülse 19 des Anschlussstücks 10 bilden. Das Anschlussstück bzw. dessen Hülse 11 ist in diesem Beispiel mehrstückig ausgeführt und weist auf dem ersten Hülsenteil 11', das eine zum Dichtungsring hin konisch grösser werdende Aussenwand hat, eine Schraubhülse 19 als zweiten Hülsenteil auf, der ein Gewinde 17 trägt, mittels welchem der zweite Hülsenteil bzw. die Schraubhülse 19 in das Innenrohr eingeschraubt werden kann. Die Schraubhülse 19 ist innen mit einem Gegenkonus zur konischen Aussenwand des Hülsenteils 11' versehen, so dass sie an der Aussenwand anliegt. Die Schraubhülse kann eine geschlitzte Schraubhülse sein, um die Montage auf dem Hülsenteil 11' zu ermöglichen. Zur Drehung der Schraubhülse dient ein Kragen 18, welcher aussen so geformt ist, dass ein Werkzeug, z.B. ein Hakenschlüssel, angesetzt werden kann, um die Schraubhülse zu drehen. Es ist auch möglich, den Kragen mit Bedienungselementen zu versehen, damit er direkt von Hand gedreht werden kann; oder es können radiale Bohrungen vorgesehen sein, in welchen ein Hebel zum Drehen ansetzbar ist. Das Einschrauben der Schraubhülse 19 presst die Hülse 11 in das Innenrohr 2, da die Hülse 11 über deren konische Aussenwand von der Schraubhülse mitgenommen wird. Die einzuschraubende Hülse des Anschlussstücks könnte auch einstückig sein, doch bedingt dies beim Einschrauben eine Drehung des ganzen Anschlussstücks.

Zur Verbindung eines Anschlussstücks 10, das z.B. eine Rohrkupplung oder eine Armatur oder ein Fitting ist, mit einem wärmegedämmten Leitungsrohr 1 wird somit ein Kalibrierring 9 des Anschlussstücks zwischen das Innenrohr 2 des Leitungsrohrs und dessen Isolationsschicht 3 getrieben. Dann wird eine Hülse 11 im Innenrohr befestigt, z.B. durch Einpressen der Hülse in das Innenrohr. Auf diese Weise entfällt die Entfernung der Isolationsschicht 3 und des Mantels 4 des Leitungsrohrs bei der Befestigung eines Anschlussstücks am Leitungsrohr.

## Patentansprüche

1. Verfahren zur Verbindung eines Anschlussstücks (10) mit einem wärmeisolierten Leitungsrohr (1), welches ein Innenrohr (2), eine dieses umgebende Dämmschicht (3) und einen äusseren Mantel (4) umfasst, wobei eine Hülse (11) des Anschlussstücks im Innenrohr befestigt wird, **dadurch gekennzeichnet, dass** an der Stirnseite des Leitungsrohrs ein Kalibrierring (9) mit einer im Wesentlichen kreiszylindrischen Innenwand (8) zwischen der Aussenwand (6) des Innenrohrs (2) und der Dämmschicht (3) eingetrieben wird, so dass die Innenwand (8) des Kalibrierrings (9) die Aussenwand (6) des Innenrohrs beaufschlagt, und dass die Hülse (11) in dem vom Kalibrierring beaufschlagten Innenrohr befestigt wird.

2. Verfahren nach Anspruch 1, **dadurch gekennzeichnet, dass** in einem ersten Schritt der Kalibrierring durch Einpressen oder Einschlagen eingetrieben wird und dass in einem zweiten Schritt die Hülse im Innenrohr befestigt wird.

3. Verfahren nach Anspruch 1 oder 2, **dadurch gekennzeichnet, dass** die Hülse (11) eine einteilige Hülse ist, die in das Innenrohr eingetrieben wird.

4. Verfahren nach Anspruch 1 oder 2, **dadurch gekennzeichnet, dass** die Hülse (11) eine zweiteilige Hülse mit einem ersten Hülsenteil (11') und einem darauf angeordneten zweiten Hülsenteil (13) ist.

5. Verfahren nach Anspruch 1 oder 2, **dadurch gekennzeichnet, dass** die Hülse (11) eine zweiteilige Hülse mit einem ersten Hülsenteil (11') und einem darauf drehbar angeordneten zweiten Hülsenteil (19) mit einem Aussengewinde (17) ist, und dass die Hülse (11) durch Drehung des zweiten Hülsenteils in das Innenrohr eingeschraubt wird.

6. Verbindungsanordnung umfassend ein Anschlussstück (10) und ein wärmegedämmtes Leitungsrohr (1) mit einem Innenrohr (2), einer Dämmschicht (3) und einem äusseren Mantel (4) wobei das Anschlussstück einen Kalibrierring (9) mit einer im Wesentlichen kreiszylindrischen Innenwand (8) aufweist, deren Umfang entsprechend dem Umfang der Aussenwand (6) des Innenrohrs (2) des Leitungsrohrs (1) gewählt ist, und eine Hülse (11) aufweist, deren Aussendurchmesser passend für den Innendurchmesser des Innenrohrs (2) ausgewählt ist, **dadurch gekennzeichnet, dass** die Verbindungsanordnung mittels des Verfahrens nach einem der Ansprüche 1 bis 5 herstellbar ist.

7. Verbindungsanordnung nach Anspruch 6, **dadurch gekennzeichnet, dass** der Kalibrierring eine konische Aussenfläche aufweist und an dem in Einführrichtung gesehen vorderen Ende (7) scharfkantig ausgebildet ist.

8. Verbindungsanordnung nach Anspruch 6 oder 7, **dadurch gekennzeichnet, dass** die Innenwand (8) des Kalibrierrings mit Ausformungen versehen ist.

9. Verbindungsanordnung nach einem der Ansprüche 6 bis 8, **dadurch gekennzeichnet, dass** die Hülse (11) einstückig ist.

10. Verbindungsanordnung nach einem der Ansprüche 6 bis 8, **dadurch gekennzeichnet, dass** die Hülse (11) zweiteilig ist und einen konischen ersten Hülsenteil (11') und einen darauf mit einem Gegenkonus angeordneten zweiten Hülsenteil (13; 19) umfasst.

11. Verbindungsanordnung nach Anspruch 10, **dadurch gekennzeichnet, dass** der zweite Hülsenteil (19) drehbar auf dem ersten Hülsenteil (11') angeordnet ist und an seiner Aussenseite ein Schraubgewinde (17) trägt.

## Claims

1. Method for connecting a connecting piece (10) with a heat insulated conduit pipe (1), comprising an inner duct (2), an insulating layer (3) surrounding it and an outer casing (4), wherein a sleeve (11) of the connecting piece is attached inside the inner duct, **characterized in that** a calibration ring (9) with a substantially circular cylindrical inner wall (8) is driven into the conduit pipe at its front end between the outer wall (6) of the inner duct (2) and the insulating layer (3) in such a way that the inner wall (8) of the calibration ring (9) impinges on the outer wall (6) of the inner duct, and **in that** the sleeve (11) is attached in the inner duct which is impinged by the calibration ring.

2. Method according to claim 1, **characterized in that** in a first step the calibration ring is driven in by force fitting or hammering and **in that** in a second step the sleeve is attached in the inner duct.

3. Method according to claim 1 or 2, **characterized in that** the sleeve (11) is a one-piece sleeve which is driven into the inner duct.

4. Method according to claim 1 or 2, **characterized in that** the sleeve (11) is a two-piece sleeve with a first sleeve piece (11') and, arranged thereon, a second sleeve piece (13).

5. Method according to claim 1 or 2, **characterized in that** the sleeve (11) is a two-piece sleeve with a first sleeve piece (11') and, rotatably arranged thereon, a second sleeve piece (19) with an external thread (17), and **in that** the sleeve (11) is screwed into the inner duct by rotating the second sleeve piece.

6. Connection arrangement comprising a connecting piece (10) and a temperature insulated conduit pipe (1) with an inner duct (2), an insulating layer (3) and an outer casing (4), wherein the connecting piece has a calibration ring (9) with a substantially circular cylindrical inner wall (8), the circumference of which is chosen to match the circumference of the outer wall (6) of the inner duct (2) of the conduit pipe (1), and has a sleeve (11), the outer diameter of which is chosen to fit the inner diameter of the inner duct (2), **characterized in that** the connection arrangement can be produced by the method according to one of the claims 1 to 5.

7. Connection arrangement according to claim 6, **characterized in that** the calibration ring has a cone-shaped outer surface and is formed with a sharp edge at the front end (7), as seen in inserting direction.

8. Connection arrangement according claim 6 or 7, **characterized in that** the inner wall (8) of the calibration ring is provided with mouldings.

9. Connection arrangement according to one of the claims 6 to 8, **characterized in that** the sleeve (11) is in one piece.

10. Connection arrangement according to one of the claims 6 to 8, **characterized in that** the sleeve (11) is a two-piece sleeve and comprises a cone-shaped first sleeve piece (11') and, arranged on it with a countercone, a second sleeve piece (13; 19).

11. Connection arrangement according to one of the preceding claims, **characterized in that** the second sleeve piece (19) is rotatably arranged on the first sleeve piece (11') and carries a screw thread (17) on its outer surface.

## Revendications

1. Procédé pour connecter une pièce de connexion (10) avec un conduit (1) thermiquement isolé, comprenant un tuyau intérieur (2), une couche isolante (3) entourant le tuyau intérieur et une surface extérieure (4), une manchette (11) de la pièce de connexion étant attachée à l'intérieur du tuyau intérieur, **caractérisé en ce qu'**un anneau de calibration (9) avec une paroi (8) intérieure essentiellement circulaire cylindrique est enfoncée dans le conduit du côté face entre la paroi extérieure (6) du tuyau intérieur (2) et la couche isolante (3), de sorte que la paroi (8) de l'anneau de calibration (9) pressurise la paroi extérieure (6) du tuyau intérieur, et **en ce que** la manchette (11) est attachée dans le tuyau intérieur qui est pressurisé par l'anneau de calibration.

2. Procédé selon la revendication 1, **caractérisé en ce que** dans une première étape l'anneau de calibration est enfoncé par pressage ou battage et **en ce que** dans une deuxième étape la manchette est attachée dans le tuyau intérieur.

3. Procédé selon l'une des revendications 1 ou 2, **caractérisé en ce que** la manchette (11) est une manchette en une pièce étant enfoncée dans le tuyau intérieur.

4. Procédé selon l'une des revendications 1 ou 2, **caractérisé en ce que** la manchette (11) est une manchette en deux pièces avec une première pièce (11') et, arrangée là-dessus, une deuxième pièce de manchette (13).

5. Procédé selon l'une des revendications 1 ou 2, **caractérisé en ce que** la manchette (11) est une manchette en deux pièces avec une première pièce de manchette (11') et, arrangée là-dessus de manière rotative, une deuxième pièce de manchette (19) avec un filet extérieur (17), et **en ce que** la manchette (11) est filetée dans le tuyau intérieur en tournant la deuxième pièce de manchette.

6. Arrangement de connexion comprenant une pièce de connexion (10) et un conduit (1) isolé thermiquement, avec un tuyau intérieur (2), une couche isolante (3) et une surface extérieure (4), la pièce de connexion ayant un anneau de calibration (9) avec une paroi intérieure (8) essentiellement circulaire cylindrique, la circonférence de laquelle étant choisie de manière à correspondre à la circonférence de la paroi extérieure (6) du tuyau intérieur (2) du conduit (1), et ayant une manchette (11), le diamètre extérieur de laquelle est choisi de manière à correspondre au diamètre intérieur du tuyau intérieur (2), **caractérisé en ce que** l'arrangement de connexion peut être produit par le procédé selon l'une des revendications 1 à 5.

7. Arrangement de connexion selon la revendication 6, **caractérisé en ce que** l'anneau de calibration a une surface extérieure en forme de cône et est formé avec une arête vive du côté de sa face (7), vu en direction d'insertion.

8. Arrangement de connexion selon l'une des revendications 6 ou 7, **caractérisé en ce que** la paroi intérieure (8) de l'anneau de calibration est dotée de protubérances.

9. Arrangement de connexion selon l'une des revendications 6 à 8, **caractérisé en ce que** la manchette (11) est en une pièce.

10. Arrangement de connexion selon l'une des revendications 6 à 8, **caractérisé en ce que** la manchette (11) est une manchette en deux pièces et comprend une première pièce de manchette (11') en forme de cône et, arrangée là-dessus avec un contre-cône, une deuxième pièce de manchette (13 ; 19).

11. Arrangement de connexion selon l'une des revendications précédentes, **caractérisé en ce que** la deuxième pièce de manchette (19) est arrangée de manière rotative sur la deuxième pièce (11') et porte un filet (17) sur sa surface extérieure.
